Europäisches Patentamt

European Patent Office

Office européen des brevets

(19)

(11) **EP 1 152 984 B1**

(12) **FASCICULE DE BREVET EUROPEEN**

(45) Date de publication et mention
de la délivrance du brevet:
**07.04.2004 Bulletin 2004/15**

(21) Numéro de dépôt: **00900523.2**

(22) Date de dépôt: **05.01.2000**

(51) Int Cl.⁷: $C02F\ 3/06$, B01D 24/20

(86) Numéro de dépôt international:
**PCT/FR2000/000006**

(87) Numéro de publication internationale:
**WO 2000/044676 (03.08.2000 Gazette 2000/31)**

(54) **NOUVEAU PROCEDE DE FILTRATION D'EAUX DE SURFACE A COUCHE SURNAGEANTE DE FAIBLE EPAISSEUR ET INSTALLATION DE MISE EN OEUVRE**

NEUES VERFAHREN ZUR FILTRIERUNG VON SCHWEMMENDEM DÜNNSCHICHTIGEM OBERFLÄCHENWASSER UND VORRICHTUNG ZUR DURCHFÜHRUNG DES VERFAHRENS

NOVEL METHOD FOR FILTERING SURFACE WATER WITH THIN SUPERNATANT LAYER AND IMPLEMENTING PLANT

(84) Etats contractants désignés:
**AT BE CH CY DE DK ES FI FR GB GR IE IT LI LU MC NL PT SE**

(30) Priorité: **27.01.1999 FR 9901064**

(43) Date de publication de la demande:
**14.11.2001 Bulletin 2001/46**

(73) Titulaire: **AQUATRIUM
54000 Nancy (FR)**

(72) Inventeurs:
• **PROBST, Laurent
F-54270 Essey les Nancy (FR)**
• **COULOM, Thierry
F-54000 Nancy (FR)**
• **BOEGLIN, Stéphane
F-54930 Neuves Maisons (FR)**

(74) Mandataire: **Poupon, Michel
Cabinet Michel Poupon,
3 rue Ferdinand Brunot
88026 Epinal Cedex (FR)**

(56) Documents cités:
**GB-A- 1 333 585          GB-A- 2 236 689**

EP 1 152 984 B1

## Description

La présente invention concerne un nouveau procédé de filtration de milieux liquides, en particulier mais non limitativement des eaux de surface ; elle concerne également les installations de mise en oeuvre du procédé.

Un procédé traditionnellement utilisé pour traiter les eaux de surface est la filtration biologique lente qui est une reproduction du processus naturel d'autoépuration de l'eau. Cette technique consiste à faire percoler un flux d'eau à traiter au travers d'un lit de matériau filtrant à des vitesses inférieures à 10m/jour (voir schéma de principe en figure A).

Le fonctionnement d'une telle installation doit comporter un matériau filtrant (a) dont l'épaisseur initiale est d'environ un mètre et une hauteur d'eau surnageante (b) de 1,5 à 2 mètres. Par conséquent, la hauteur d'un tel ouvrage est comprise entre 2,5 et 3 mètres.

Un système de drainage recueille l'eau filtrée en fond d'installation.

Dans une telle installation, le flux de matières en suspension de l'eau brute entrant dans le matériau filtrant (a) se répartit uniformément sur la surface de celui-ci provoquant un colmatage uniforme de l'ensemble de la surface filtrante et entraînant un rehaussement de la hauteur d'eau surnageante (b) de manière à conserver un débit d'eau traitée constant. Après que l'eau eut atteint un niveau maximum, il est nécessaire d'intervenir afin d'opérer un processus de décolmatage. Ce décolmatage s'effectue en trois phases principales : vidange de l'eau surnageante, extraction des quatre premiers centimètres colmatés, remplissage du filtre avec l'eau à traiter. Ces trois opérations sont lourdes dans leur mise en oeuvre et nécessitent un temps assez long qui peut dépasser la semaine. Aussi est-il nécessaire de dédoubler les installations afin de maintenir la production d'eau potable. Aussi, la filtration biologique lente traditionnelle nécessite-t-elle de disposer d'une eau brute de qualité inférieure à 10 NTU afin de limiter dans le temps les opérations de décolmatage. Par ailleurs, l'extraction de matériau filtrant lors des décolmatages successifs engendre une baisse progressive de la hauteur de ce dernier. Après avoir atteint une hauteur limite de 40 à 50 cm, il est nécessaire de réapprovisionner en matériau filtrant, ce qui est un facteur limitant pour la gestion de l'installation.

Le but de l'invention est de s'affranchir de toutes ces contraintes de l'art antérieur.

Pour atteindre ce but, la demanderesse est allée à l'encontre des idées reçues et a observé, sous certaines conditions de fonctionnement, un phénomène nouveau et innatendu.

Le recyclage d'un flux sortant, tel qu'il est traditionnellement mis en oeuvre, consiste à réinjecter le flux sortant dans le flux d'entrée en amont d'une installation, ceci conduisant à une dilution du flux d'entrée.

Ce recyclage traditionnel n'amène pas d'améliorations.

L'idée inventive a consisté à réinjecter le flux sortant à la surface du média filtrant, en l'opposant au flux d'entrée et en maintenant une faible hauteur d'eau surnageante, de manière à ce qu'il n'y ait pas dilution des flux.

Il se produit alors un dépôt de matières localisé en surface du matériau filtrant, dépôt d'abord à proximité de l'entrée de l'installation puis s'agrandissant progressivement vers la sortie jusqu'à couvrir toute la surface du matériau filtrant.

Le nouveau procédé selon l'invention est un procédé de filtration de milieux liquides, en particulier mais non limitativement des eaux de surface, procédé selon lequel le liquide à filtrer de débit (Q) est amené au contact de la surface d'un média filtrant puis traverse ledit média de part en part, caractérisé en ce que

- on crée à la surface du média filtrant une couche sumageante de liquide de faible épaisseur (e) en contrôlant son niveau haut par un moyen approprié,
- on organise dans cette couche mince surnageante un cheminement hydraulique de longueur (L),
- on amène un flux de liquide à traiter de débit (Q) à l'entrée du cheminement hydraulique,
- on récupère le liquide de débit (nQ) ayant traversé le média filtrant après n cycles en le réinjectant dans la couche sumageante à la sortie du cheminement hydraulique, produisant ainsi en une section du cheminement la rencontre de deux flux opposés,
- on extrait après n cycles un liquide traité de débit (Q).

Le rapport e/L est faible et préférentiellement inférieur à 0,1.

Selon une variante on détermine le niveau haut de la couche sumageante d'épaisseur (e) par la position de la sortie du liquide traité de débit (Q).

Selon une autre variante on limite l'épaisseur (e) par le choix d'un média filtrant en forme de tube de faible diamètre intérieur.

Une installation pour la mise en oeuvre du procédé est une installation de filtration, en particulier mais non limitativement des eaux de surface, installation comportant un média filtrant à la surface duquel est amené un liquide à traiter de débit (Q), celui-ci traversant ledit média de part en part, installation caractérisée en ce qu'elle comporte :

- un moyen pour déterminer à la surface du média filtrant une couche de liquide sumageante de faible épaisseur (e),
- des moyens pour déterminer dans cette couche mince un cheminement hydraulique de longueur (L),
- une entrée du liquide à traiter située à une extrémité dudit cheminement hydraulique

et caractérisée en ce qu'une boucle de recyclage conduit le liquide depuis sa sortie du média filtrant jusqu'à un point d'injection situé à l'autre extrémité du cheminement hydraulique où se situe également la sortie du liquide filtré en sortie d'installation.

Le nouveau procédé selon l'invention palie tous les inconvénients de l'art antérieur, et les installations qui le mettent en oeuvre sont de conception simple, leurs principaux avantages sont les suivants :

- hauteur des ouvrages considérablement réduite (hauteur divisée par 6)
- capacité de traiter de fortes charges en matières en suspension, par exemple : eaux de surface, eaux karstiques avec une turbidité >300 NTU
- capacité de maintenir une qualité de traitement malgré une forte variation de la qualité des eaux brutes
- aucun ajout de réactif chimique
- organisation du colmatage et sa limitation en surface sans pénétration (empilement des matières en suspension dans la première partie du filtre)
- obtention d'un colmatage uniquement en surface
- accès direct à la couche colmatée par le dessus du filtre
- décolmatage très aisé nécessitant un outil de type raclette ou jet d'eau
- n'avoir aucune perte et aucune extraction de matériau filtrant d'où la pérennité de l'installation
- conserver une activité biologique intense (car le matériau filtrant très ensemencé sur les premiers centimètres n'est pas extrait après chaque lavage de la couche colmatée)
- consommation énergétique très faible (inférieure à 0,4 kw/m3 d'eau produite).

Selon une variante d'installation, le média filtrant est du sable et le niveau haut de la couche surnageante est déterminé par le niveau de la sortie du liquide filtré en sortie d'installation.

Selon une autre variante, le média filtrant est un ensemble de tubes filtrants à parois membranaires traversées par le liquide et en ce que l'épaisseur (e) est limitée par le diamètre des tubes.

On comprendra mieux l'invention à l'aide de la description qui suit faite en référence aux figures annexées suivantes :

- Figure A : croquis montrant, vu en coupe verticale, une installation de l'art antérieur,
- Figure 1 : croquis montrant, vu en coupe verticale, un exemple non limitatif d'installation selon l'invention et son principe de fonctionnement,
- Figure 2 : croquis en vue de dessus de l'installation de la figure 1,
- Figure 3 : croquis en perspective de l'installation de la figure 1 montrant uniquement son fonctionnement,
- Figure 4 : détail de la zone de colmatage dans l'installation de la figure 1,
- Figure 5 : croquis illustrant le procédé de lavage de l'installation de la figure 1,
- Figure 6 : croquis montrant en vue de dessus un couloir de cheminement hydraulique pouvant être prévu dans la lame sumageante de l'installation,
- Figures 7a et 7b :croquis montrant, vu en coupe, un module de filtration à membrane de l'art antérieur, fonctionnant selon deux procédés connus,
- Figure 8 : croquis montrant, vu en coupe, un module de filtration à membranes fonctionnant selon le procédé de l'invention.
- Figures 9a et 9b : croquis montrant en vue de dessus et vue en coupe verticale une variante de bac de filtration à double drainage

On décrit d'abord à titre d'exemple non limitatif une installation fonctionnant selon le procédé de l'invention.

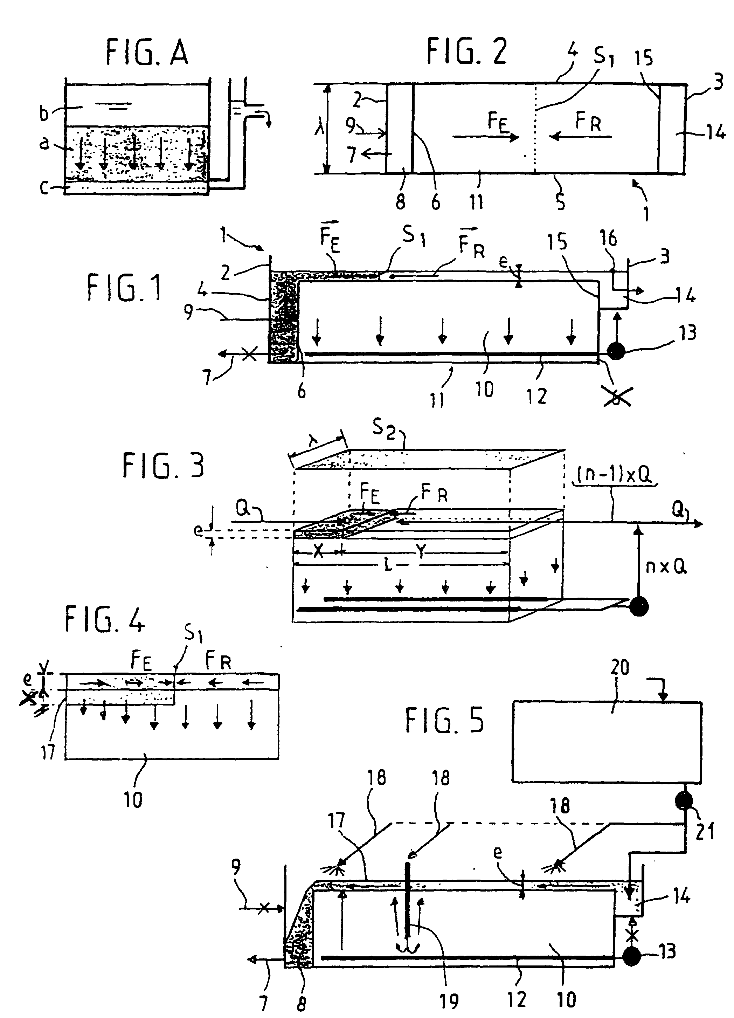

L'installation de filtration représentée en figures 1 à 5 comporte un bac de filtration dont la forme générale est parallélépipédique avec deux parois latérales (4,5) de préférence plus grandes que les deux parois d'extrémité (2,3).

A une des extrémités on prévoit une paroi de séparation (6) verticale, parallèle à la paroi d'extrémité d'entrée (2), et de préférence de même largeur ($\lambda$) de manière à créer un compartiment d'entrée (8) dans lequel débouche l'entrée d'eau brute (9).

La paroi de séparation (6) s'étend jusqu'au fond du bac (1) pour permettre le lavage qui sera expliqué plus loin, et sa hauteur est inférieure à celle de la paroi d'extrémité (2) de manière à permettre, après remplissage du compartiment (8), un passage continu et régulier de l'eau brute au dessus de ladite paroi de séparation (6) et sur toute la largeur ($\lambda$).

L'eau brute arrive ainsi horizontalement sur la surface libre d'un média filtrant (10), ici du sable, contenu dans le bac principal de l'installation (11) traverse la couche de média filtrant (10), puis est extraite par une pompe (13) à travers un ou plusieurs drains (12) prévus en fond de bac et réinjectée dans un compartiment de sortie (14) en vue d'au moins un recyclage dans les conditions ci-après.

Le compartiment de sortie (14) est séparé du bac principal (11) par une paroi de séparation (15) parallèle à la paroi de sortie (3) du bac principal (11) et de même largeur ($\lambda$) que ledit bac (11).

L'eau issue des drains est injectée dans le compartiment de sortie (14) et de préférence en bas.

Ledit compartiment de sortie n'a pas nécessairement la même profondeur que le bac principal (11) mais le bord supérieur horizontal de la paroi de séparation (15) est nécessairement au même niveau que celui de la paroi de séparation (6) de manière à ce que l'eau recyclée, après remplissage du compartiment de sortie (14) se dirige vers le bac principal, par dessus la paroi (15) et se répartisse de façon homogène sur la surface libre du média filtrant (10).

Les deux flux d'eau brute ($F_E$) et d'eau recyclée ($F_R$) circulent en sens contraire au dessus de la surface ($S_2$) du média filtrant et se rencontrent au niveau d'une surface fictive de contact ($S_1$) verticale. Ils sont symbolisés globalement par les flèches ($\overrightarrow{F_E}$) et ($\overrightarrow{F_R}$) de sens opposés, de part et d'autre de ladite surface de contact ($S_1$).

Le niveau de liquide au dessus de la surface libre du média filtrant est déterminé par la position de la sortie (16) d'eau traitée située dans le compartiment de sortie. On désignera par (e) l'épaisseur de cette couche de liquide surnageante.

Dès le premier recyclage d'eau, le flux ($\overrightarrow{F_R}$) d'eau recyclée, déjà filtrée et propre, s'oppose au flux ($\overrightarrow{F_E}$) d'eau à traiter et sale et très rapidement, on observe que l'eau brute reste cantonnée à l'extrémité d'entrée du bac principal. Au fur et à mesure des recyclages, on constate de façon surprenante que les matières ne sont pas retenues dans le média filtrant mais qu'il se crée une couche de matières sédimentées (17) de quelques millimètres en surface, qui s'étend progressivement vers la sortie, et colmate progressivement la surface libre du média filtrant.

Globalement, on peut dire que la surface de contact ($S_1$) entre les deux flux se déplace progressivement de l'entrée vers la sortie de l'installation.

Le colmatage du média filtrant induit, pour une force de pompage constante, une augmentation des pertes de charge et à terme une baisse du débit de recyclage.

Tant que le débit de recyclage est supérieur au débit d'entrée, la qualité de l'eau est sensiblement constante car la diminution des cycles de filtration est compensée par l'efficacité de filtration de chaque cycle qui est croissante au fur et à mesure du colmatage.

Les conditions de fonctionnement de l'installation, compte tenu des paramètres indiqués en figure 3, sont les suivantes :

e = épaisseur de la couche surnageante
$S_2$ = projection horizontale de la surface supérieure du média filtrant
$S_1$ = surface de contact des flux $F_E$ et $F_R$

il faut :

$$S_2 >> S_1$$

$$\text{soit } L \times \lambda >> e \times \lambda$$

$$\text{soit } L >> e \text{ ou } e/L << 1$$

il faut donc un rapport $e/L << 1$ et préférentiellement mais non limitativement inférieur à 0,05.

A chaque démarrage de l'installation, après un décolmatage, les équations De fonctionnement de l'installation s'écrivent comme suit :

- pour un débit donné Q d'eau brute à l'entrée (9) et d'eau traitée en sortie (16) et pour un débit (n-1) x Q d'eau recyclée et réinjectée dans le bac principal (11) ;
- avec L = longueur du cheminement

X = longueur en phase de colmatage de l'eau brute
Y = L- X = longueur non soumise au colmatage de l'eau brute
n > 1, n = taux de recyclage

- la position du front ($S_1$) se traduit par les équations $X = 1/n \times L$ et $Y = L \times (1-1/n)$.

Ainsi, quand le nombre n de cycles augmente, X diminue et Y augmente.

Les vitesses à l'entrée et à la sortie de l'installation, réglées pour un dimensionnement donné de l'installation, produisent en entrée et sortie des flux de régimes turbulents restant cantonnés dans les compartiments d'entrée (8) et de sortie (14). Leur vitesse diminue au cours de leur avancement dans la lame surnageante (e). On obtient un flux laminaire de part et d'autre de la surface de contact ($S_1$,) limitant ainsi au maximum les échanges chimiques et physiques de toutes natures entre les deux fluides.

Pour e/L< 0,01 on obtient les meilleurs résultats de fonctionnement et les flux ($F_E$) et ($F_R$) ne se mélangent pas.
Pour 0,01 < e/L< 0,05 on obtient encore de très bons résultats.
Pour 0,05 < e/L< 0,1 les résultats sont acceptables.
Pour des valeurs de e/L croissantes et supérieures à 0,1, on observe progressivement un mélange de plus en plus important entre les flux ($F_E$) et ($F_R$) préjudiciable au bon fonctionnement de l'installation sans pour autant l'interdire.

On explique à présent les méthodes de lavage de l'installation (voir figure 5)

On effectue un premier lavage de surface, soit régulièrement soit lorsqu'on s'aperçoit que la couche (17) de sédiment recouvre en presque totalité la surface libre du média filtrant.

Pour cela on arrête au préalable l'installation en fermant l'entrée d'eau à traiter (9) et la sortie d'eau recyclée (13).

A l'aide d'un jet (18) et/ou d'une raclette on pousse les sédiments de surface vers le compartiment d'entrée et on les évacue par la sortie de lavage (7) située en fond de compartiment d'entrée (8).

Cette opération est très simple et très rapide. Les matières filtrées étant restées au dessus du média filtrant sans se mélanger avec lui, le lavage selon l'invention n'entraînera que les matières déposées sans diminuer la hauteur du média filtrant (pas de perte de sable), au contraire des installations de l'art antérieur où les matières retenues et le sable sont mélangées (perte de sable par extraction du mélange pour décolmater).

De façon optionnelle, on pourra prévoir d'utiliser comme eau de lavage de l'eau traitée et stockée par pompage (21) dans un réservoir (20) comme illustré en figure 5.

Pour qu'il n'y ait pas colmatage du média filtrant dans son épaisseur, suite par exemple à un dysfonctionnement accidentel, il est possible d'effectuer un lavage profond par injection en profondeur d'un liquide sous pression par un tube (19) introduit et déplacé dans la masse de sable.

On peut prévoir des variantes de réalisation par exemple en utilisant deux ou plusieurs bacs de filtration tels que (1) en série, si la quantité de matière à séparer est importante (variante non représentée).

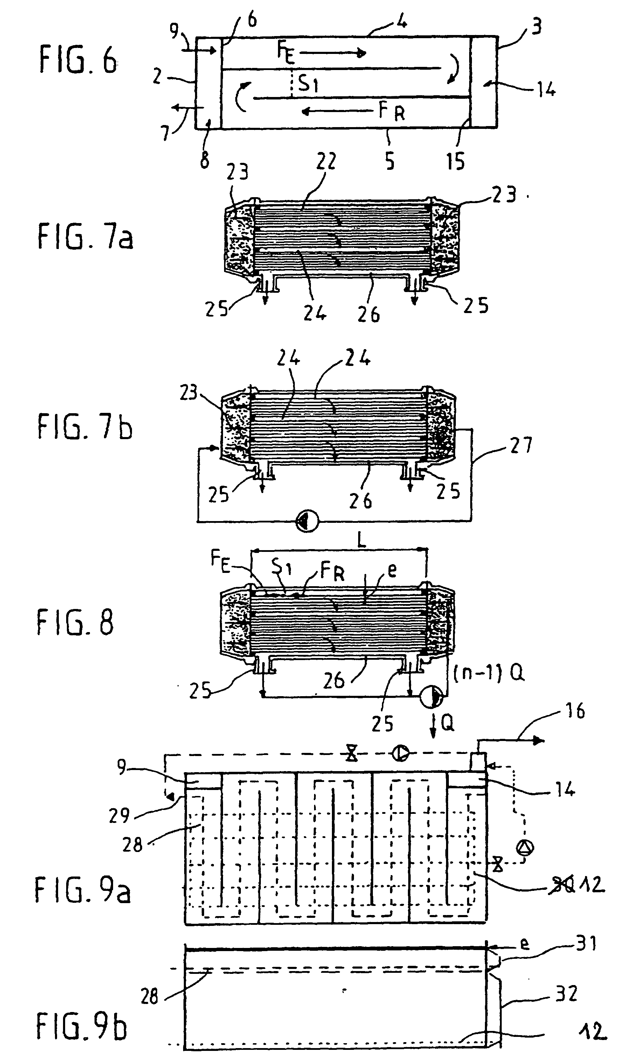

On peut également prévoir de diriger sur la surface libre du média les écoulements de flux ($F_E$) et ($F_R$) à l'aide de couloirs comme par exemple sur la figure 6.

La longueur (L) est dans ce cas la longueur du cheminement total des flux entre entrée et sortie du couloir. Cette construction permet à surface égale, d'allonger (L) donc de réduire encore le rapport e/L et d'optimiser l'installation.

Selon une autre variante de filtre à sable représentée en figures 9a et 9b, on peut équiper l'installation d'un double drainage. Un drainage supérieur (28) dont la géométrie suit celle du cheminement des flux dans les couloirs en chicane disposés dans la lame surnageante (e), ledit drainage étant placé en partie haute du média filtrant, et il se caractérise par un débit important (n=10) qui permet de minimaliser la longueur X. Préférentiellement, la sortie (29) de ce drain se fait du côté de l'entrée d'eau brute (9) pour être recyclée en sortie (14) de l'installation. Un drainage inférieur (12) est disposé au fond du média filtrant comme dans les figures 1 à 6, il se caractérise par un débit beaucoup plus faible (n=1,5) qui permet de maintenir une vitesse de filtration lente.

Dans tout ce qui précède, on comprendra que le sable qui constitue le média filtrant peut être composé d'une couche de sable de granulométrie homogène ou de plusieurs couches superposées de sable de granulométries différentes, par exemple deux couches (31,32) sur la figure 9b.

On peut également utiliser d'autres types de moyens de filtration tels que des modules filtrants à membrane connus et utilisés en micro, ultra-filtration et nano-filtration.

A titre d'exemple, on a représenté un tel module fonctionnant en mode frontal en figure 7a, en mode tangentiel en figure 7b (deux modes de fonctionnement connus).

Un tel module comprend plusieurs faisceaux de tubes filtrants (22) dont les parois constituent le média filtrant traversé par le liquide à traiter.

Sur les exemples des figures 7a et 7b, le liquide à traiter (23) est injecté à l'intérieur des tubes (22) et recueilli après filtration dans l'intervalle interstitiel (24) puis extrait par deux sorties (25) du carter métallique (26).

Dans le cas de la figure 7b, une fraction (27) non traitée du liquide est réinjectée dans les tubes pour une opération traditionnelle de recyclage telle qu'on l'a décrite en introduction de la présente demande.

La figure 8 montre le même module fonctionnant selon le principe nouveau de l'invention.

Le liquide à filtrer de débit (Q) est injecté à une extrémité et à l'intérieur des tubes, traverse leurs parois, puis est extrait en sorties (25) du carter du module et réinjecté en partie à l'intérieur des tubes mais à l'extrémité opposée à l'extrémité d'entrée des liquides à traiter.

Ainsi, on obtient dans chaque tube deux flux en opposition ($\overrightarrow{F_E}$) et ($\overrightarrow{F_R}$) se rencontrant en une section ($S_1$) du tube, et un dépôt de sédiment sur la paroi intérieure du tube, s'étendant progressivement jusqu'à encombrer la longueur totale (L) du tube. Le nettoyage sera alors facilement effectué par injection de liquide sous pression après arrêt du dispositif.

Le rapport e/L et ici déterminé par les dimensions des composants : (e) étant le diamètre d'un tube et L sa longueur.

## Revendications

**1.** Procédé de filtration de milieux liquides, en particulier mais non limitativement des eaux de surface, procédé selon lequel le liquide à filtrer de débit (Q) est amené au contact de la surface ($S_2$)d'un média filtrant puis traverse ledit média de part en part, **caractérisé en ce que**

- on crée à la surface du média filtrant une couche surnageante de liquide d'épaisseur (e) en contrôlant son niveau haut par un moyen appropné,
- on organise dans cette couche mince un cheminement hydraulique de longueur (L).
- on amène un flux de liquide à traiter de débit (Q) à l'entrée du cheminement hydraulique,
- on récupère le liquide de débit (nQ) ayant traversé le média filtrant après n cycles en le réinjectant dans la couche surnageante à la sortie du cheminement hydraulique, produisant ainsi en une section S1 du cheminement la rencontre de deux flux liquides opposés ($\overrightarrow{F_E}$) et ($\overrightarrow{F_R}$).
- on extrait après n cycles un liquide traité de débit (Q),

et **caractérisé en ce que** on choisi des dimensions (e) et (L) dans un rapport e/L inférieur à 0,1.

**2.** Procédé de filtration selon la revendication 1, **caractérisé en ce que** on choisi un rapport e/L inférieur à 0,05.

3. Procédé de filtration selon la revendication 2, caracténsé en ce que on choisi un rapport e/L inférieur à 0,01.

4. Procédé de filtration selon l'une des revendications 1 à 3, **caractérisé en ce qu'**on détermine le niveau haut de la couche sumageante d'épaisseur (e) par la position de la sortie (16) du liquide traité de débit (Q).

5. Procédé de filtration selon l'une des revendications 1 à 3, **caractérisé en ce qu'**on limite l'épaisseur (e) par le choix d'un média filtrant en forme de tube de faible diamètre intérieur.

6. Installation de filtration, en particulier mais non limitativement des eaux de surface, installation comportant un média filtrant à la surface duquel est amené un liquide à traiter de débit (Q), celui-ci traversant ledit média de part en part, installation **caractérisée en ce qu'**elle comporte :

   - un moyen pour déterminer à la surface du média filtrant une couche de liquide sumageante d'épaisseur (e),
   - des moyens pour déterminer dans cette couche mince un cheminement hydraulique de longueur (L),
   - une entrée du liquide à traiter située à une extrémité dudit cheminement hydraulique

   et **caractérisée en ce qu'**une boucle de recyclage conduit le liquide depuis sa sortie du média filtrant jusqu'à un point d'injection situé à l'autre extrémité du cheminement hydraulique où se situe également la sortie (16) du liquide filtré en sortie d'installation, produisant ainsi dans la couche de liquide surnageante la rencontre de deux flux liquides opposés, et **en ce que** les dimensionnements de l'installation sont tels que e/L est inférieur à 0,1

7. Installation selon la revendication précédente, **caractérisée en ce que** le média filtrant est du sable et **en ce que** le niveau haut de la couche sumageante est déterminé par le niveau de la sortie (16) du liquide filtré de sortie.

8. Installation selon la revendication 7, **caractérisée en ce que** le sable est contenu dans un bac principal (11) de forme rectangulaire comportant à une de ses extrémités un compartiment d'entrée (8) dans lequel débouche une entrée de liquide brut (9), à son autre extrémité un compartiment de sortie (14) ans lequel est située la sortie (16) du liquide traité, l'eau ayant traversé le sable étant extraite par au moins un drain (12) puis réinjectée dans le compartiment de sortie (14) en vue d'au moins un recyclage.

9. Installation selon la revendication 8, **caractérisée en ce qu'**elle comporte en partie basse du compartiment d'entrée, une sortie de lavage (7).

10. Installation selon l'une des revendications 7 à 9, **caractérisée en ce qu'**elle comporte en outre un réservoir (11) pour stocker de l'eau de lavage.

11. Installation selon l'une des revendications 8 à 10, **caractérisée en ce qu'**elle comporte un drainage supérieur (28) **caractérisé par** un débit important, et un drainage inférieur (12) **caractérisé par** un débit plus faible.

12. Installation selon la revendication 6, **caractérisée en ce que** le média filtrant est un ensemble de tubes filtrants à parois membranaires traversées par le liquide et **en ce que** l'épaisseur (e) est limitée par le diamètre des tubes.

**Claims**

1. Method of filtering liquid media, in particular but not limitingly surface waters, according to which method the discharge liquid to be filtered (Q) is brought into contact with the surface ($S_2$) of a filtering medium, then it traverses said medium completely, **characterised in that**

   - a supernatant layer of liquid of thickness (e) is created on the surface of the filtering medium by controlling its high level by an appropriate means,
   - a hydraulic path of length (L) is provided in this thin layer,
   - a flow of discharge liquid to be treated (Q) is brought to the inlet of the hydraulic path,
   - the discharge liquid (nQ), having traversed the filtering medium after n cycles, is recovered by re-injecting it into the supernatant layer at the outlet of the hydraulic path, thereby producing in one section S1 of the path the meeting of two opposite liquid flows ($\vec{F_E}$) and ($\vec{F_R}$), and
   - a treated discharge liquid (Q) is extracted after n cycles,

   and **characterised in that** dimensions (e) and (L) are selected in a ratio e/L of less than 0.1.

2. Filtration method according to claim 1, **characterised in that** a ratio e/L of less than 0.05 is selected.

3. Filtration method according to claim 2, **characterised in that** a ratio e/L of less than 0.01 is selected.

4. Filtration method according to one of claims 1 to 3, **characterised in that** the high level of the supernatant layer of thickness (e) is determined by the position of the outlet (16) of the treated discharge liquid (Q).

5. Filtration method according to one of claims 1 to 3, **characterised in that** the thickness (e) is limited by the choice of a filtering medium in the form of a tube of small internal diameter.

6. Filtration installation, in particular but non limitingly for surface waters, said installation comprising a filtering medium to the surface of which is brought a discharge liquid to be treated (Q), the latter traversing said medium completely, said installation **characterised in that** it comprises:

   - a means for determining a layer of supernatant liquid of thickness (e) at the surface of the filtering medium,
   - means for determining a hydraulic path of length (L) in this thin layer, and
   - an inlet for the liquid to be treated situated at one end of said hydraulic path,

   and **characterised in that** a recycling loop guides the liquid from the time when it leaves the filtering medium to an injection point situated at the other end of the hydraulic path where the outlet (16) of the filtered liquid is also situated at the installation outlet, thereby producing in the layer of supernatant liquid the meeting of two opposite liquid flows, and **in that** the dimensions of the installation are such that e/L is less than 0.1.

7. Installation according to the preceding claim, **characterised in that** the filtering medium is sand, and **in that** the high level of the supernatant layer is determined by the level of the outlet (16) of the filtered outlet liquid.

8. Installation according to claim 7, **characterised in that** the sand is contained in a main hopper (11) of rectangular configuration, comprising at one of its ends an inlet compartment (8) in which terminates an unfiltered liquid inlet (9), at its other end an outlet compartment (14) in which is situated the outlet (16) of the treated liquid, the water having traversed the sand being extracted by at least one drain (12), then reinjected into the outlet compartment (14) with a view to being recycled at least once.

9. Installation according to claim 8, **characterised in that** it comprises a washing outlet (7) in the bottom portion of the inlet compartment.

10. Installation according to one of claims 7 to 9, **char-**acterised in that** it also comprises a reservoir (11) for storing washing water.

11. Installation according to one of claims 8 to 10, **characterised in that** it comprises an upper drainage (28), **characterised by** a strong flow, and a lower drainage (12), **characterised by** a weaker flow.

12. Installation according to claim 6, **characterised in that** the filtering medium is an assembly of filtering tubes with membranous walls traversed by the liquid, and **in that** the thickness (e) is limited by the diameter of the tubes.

**Patentansprüche**

1. Verfahren zur Filtration von flüssigen Medien, insbesondere, jedoch nicht einschränkend, von Oberflächenwasser, wobei die zu filtrierende Flüssigkeit mit einer Durchflussleistung (Q) mit der Oberfläche (S2) eines Filtrationsmittels in Kontakt gebracht wird und dann dieses Mittel durchströmt, **dadurch gekennzeichnet, dass**

   - auf der Oberfläche des Filtrationsmittels eine aufschwimmende Schicht der Flüssigkeit der Dicke (e) gebildet wird, wobei ihre Höhe durch ein geeignetes Mittel eingestellt wird,

   - in dieser dünnen Schicht ein hydraulischer Pfad der Länge (L) gebildet wird,

   - dem Eingang des hydraulischen Pfades ein zu behandelnder Flüssigkeitsfluss mit der Durchflussleistung (Q) zugeführt wird,

   - die Flüssigkeit mit einer Durchflussleistung (nQ) wieder gewonnen wird, nachdem sie das Filtrationsmittel nach n Zyklen durchströmt hat, indem sie in die aufschwimmende Schicht am Ausgang des hydraulischen Pfades wieder eingespritzt wird, wodurch in einem Abschnitt (S1) des Pfades ein Zusammenführen von zwei entgegengesetzten Flüssigkeitsströmen ($F_E$) und ($F_R$) erzeugt wird,

   - nach n Zyklen eine behandelte Flüssigkeit mit einer Durchflussleistung (Q) abgezogen wird, und dass

   - die Größen (e) und (L) in einem Verhältnis e/L gewählt werden, das kleiner als 0,1 ist.

2. Verfahren zur Filtration nach Anspruch 1, **dadurch gekennzeichnet, dass** ein Verhältnis e/L gewählt wird, das kleiner als 0,05 ist.

**3.** Verfahren zur Filtration nach Anspruch 2, **dadurch gekennzeichnet, dass** ein Verhältnis e/L gewählt wird, das kleiner als 0,01 ist.

**4.** Verfahren zur Filtration nach einem der Ansprüche 1 bis 3, **dadurch gekennzeichnet, dass** die Höhe der aufschwimmenden Schicht der Dicke (e) durch die Höhe des Ausgangs (16) der behandelten Flüssigkeit der Durchflussleistung (Q) bestimmt wird.

**5.** Verfahren zur Filtration nach einem der Ansprüche 1 bis 3, **dadurch gekennzeichnet, dass** die Dicke (e) durch die Wahl eines Filtrationsmittels in Form eines Rohrs mit kleinem Innendurchmesser begrenzt wird.

**6.** Filtrationsvorrichtung, insbesondere, jedoch nicht einschränkend, für Oberflächenwasser, die ein Filtrationsmittel aufweist, auf dessen Oberfläche eine zu behandelnde Flüssigkeit mit einer Durchflussleistung (Q) zugeführt wird, die das genannte Mittel durchströmt, wobei die Vorrichtung **dadurch gekennzeichnet ist, dass** sie aufweist:

- ein Mittel zur Bildung einer Schicht der aufschwimmenden Flüssigkeit der Dicke (e) auf der Oberfläche des Filtrationsmittels,

- Mittel zur Bildung eines hydraulischen Pfades der Länge (L) in dieser dünnen Schicht,

- einen Eingang der zu behandelnden Flüssigkeit, der an einem Ende des genannten hydraulischen Pfades angeordnet ist, und **dadurch gekennzeichnet, dass**

- ein Wiedergewinnungskreis die Flüssigkeit von ihrem Ausgang aus dem Filtrationsmittel zu einem Einspritzpunkt leitet, der am anderen Ende des hydraulischen Pfades angeordnet ist, wo sich auch der Ausgang (16) der am Ausgang der Vorrichtung filtrierten Flüssigkeit befindet, wobei

- in der Schicht der aufschwimmenden Flüssigkeit ein Zusammenführen von zwei entgegengesetzten Flüssigkeitsströmen erzeugt wird, und wobei

- die Abmessungen der Vorrichtung derart sind, dass e/L kleiner als 0,1 ist.

**7.** Vorrichtung nach dem vorhergehenden Anspruch, **dadurch gekennzeichnet, dass** das Filtrationsmittel Sand ist und die Höhe der aufschwimmenden Schicht durch die Höhe des Ausgangs (16) für die filtrierte, austretende Flüssigkeit bestimmt wird.

**8.** Vorrichtung nach Anspruch 7, **dadurch gekennzeichnet, dass** der Sand in einem rechteckigen Hauptbehälter (11) enthalten ist, der an einem seiner Enden einen Eingangsraum (8) aufweist, in dem ein Eingang der unbehandelten Flüssigkeit (9) mündet, und an seinem anderen Ende einen Ausgangsraum (14) aufweist, in dem der Ausgang (16) der behandelten Flüssigkeit angeordnet ist, wobei das durch den Sand hindurch fließende Wasser mittels mindestens einer Leitung (12) abgeführt und anschließend in den Ausgangsraum (14) mit dem Ziel mindestens eines Umlaufs wieder eingespritzt wird.

**9.** Vorrichtung nach Anspruch 8, **dadurch gekennzeichnet, dass** die Vorrichtung im unteren Bereich des Eingangsraums einen Spülausgang (7) aufweist.

**10.** Vorrichtung nach einem der Ansprüche 7 bis 9, **dadurch gekennzeichnet, dass** die Vorrichtung weiterhin einen Behälter (11) zum Aufbewahren des Spülwassers aufweist.

**11.** Vorrichtung nach einem der Ansprüche 8 bis 10, **dadurch gekennzeichnet, dass** die Vorrichtung eine obere Leitung (28) mit einer großen Durchflussleistung und eine untere Leitung (12) mit einer kleineren Durchflussleistung aufweist.

**12.** Vorrichtung nach Anspruch 6, **dadurch gekennzeichnet, dass** das Filtrationsmittel eine Anordnung von Filterröhren mit Membranwänden ist, durch die die Flüssigkeit hindurch fließt, und dass die Dicke (e) durch den Durchmesser der Röhren begrenzt ist.

FIG. A

FIG. 2

FIG. 1

FIG. 3

FIG. 4

FIG. 5

FIG. 6

FIG. 7a

FIG. 7b

FIG. 8

FIG. 9a

FIG. 9b